(19) Europäisches Patentamt
European Patent Office
Office européen des brevets

(11) **EP 4 610 318 A1**

(12) **EUROPEAN PATENT APPLICATION**
published in accordance with Art. 153(4) EPC

(43) Date of publication:
**03.09.2025   Bulletin 2025/36**

(21) Application number: **24749965.0**

(22) Date of filing: **18.01.2024**

(51) International Patent Classification (IPC):
**C09D 11/40** (2014.01)   **B41M 5/00** (2006.01)
**C09D 11/322** (2014.01)

(52) Cooperative Patent Classification (CPC):
**B41M 5/00; C09D 11/322; C09D 11/40**

(86) International application number:
**PCT/JP2024/001187**

(87) International publication number:
**WO 2024/162011 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **31.01.2023   JP 2023012927**

(71) Applicant: **DIC Corporation**
**Tokyo 174-8520 (JP)**

(72) Inventors:
- **GOUDA, Keigo**
  **Kitaadachi-gun, Saitama 362-8577 (JP)**
- **NABE, Takaaki**
  **Kitaadachi-gun, Saitama 362-8577 (JP)**
- **FUJIMOTO, Satomi**
  **Kitaadachi-gun, Saitama 362-8577 (JP)**
- **NAITO, Yuri**
  **Kitaadachi-gun, Saitama 362-8577 (JP)**
- **CHEAWCHAN, Sumitra**
  **Kitaadachi-gun, Saitama 362-8577 (JP)**

(74) Representative: **Kraus & Lederer PartGmbB**
**Thomas-Wimmer-Ring 15**
**80539 München (DE)**

(54)   **INK SET**

(57)   **The** present invention addresses the problem of providing an ink set that exhibits excellent chroma of primary and secondary colors, especially the chroma of green, and excellent abrasion resistance of a printed image. Specifically, the present invention provides an ink set including a yellow ink containing a binder, a dispersing resin, an aqueous solvent, and C.I. Pigment Yellow 74 as a pigment; and a cyan ink containing a binder, a dispersing resin, an aqueous solvent, and C.I. Pigment Blue 15:3 as a pigment. **The** C.I. Pigment Yellow 74 has a volume-average particle size of from 80 to 120 nm and a content of from 4.0 to 10.0 mass% in relation to the total amount of the yellow ink, and the C.I. Pigment Blue 15:3 has a volume-average particle size of from 80 to 100 nm and a content exceeding 2.5 mass% and less than 5.5 mass% in relation to the total amount of the cyan ink.

EP 4 610 318 A1

**Description**

## TECHNICAL FIELD

The present invention relates to an ink set. In particular, the present invention relates to an ink set that exhibits particularly improved chroma of green and is suitable as an inkjet ink.

## BACKGROUND ART

Inkjet recording is a recording method in which ink droplets are directly ejected from very fine nozzles onto a recording member and adhered to the recording member to thereby obtain characters and images. This method is advantageous in terms of not only low noise and good operability of the device that is used, but also the ease of color formation and the ability to use plain paper as the recording member, and therefore inkjet recording devices have been widely used as output devices in homes and offices in recent years.

Meanwhile, through technical advancements in the inkjet recording method, industrial printers are also being expected to be used as output devices for digital printing, and in some cases, analog printers are being replaced with such inkjet digital printers. In addition, as inks (inkjet inks) for the inkjet recording method, there is an increasing demand for water-based inks in place of conventional solvent-based inks and UV inks (for example, see Patent Document 1) from perspectives such as environmental protection.

Moreover, high chroma is generally required in the printing quality (print quality) of water-based inks. For example, Patent Document 2 discloses an ink set for inkjet recording, the ink set including a yellow ink, a magenta ink, and a cyan ink, with each ink containing a specific pigment and a specific type of dispersant. Document 2 also indicates that the ink set improves the chroma of an image and has excellent storage stability of the ink.

## CITATION LIST

## PATENT LITERATURE

Patent Document 1: JP 2011-12226 A
Patent Document 2: JP 2005-41906 A

## SUMMARY OF INVENTION

## TECHNICAL PROBLEM

In order to increase the chroma of primary and secondary colors of ink, the pigments serving as coloring materials must remain close to the surface of the paper, and one conceivable measure to achieve this is to reduce the size of the ink droplets. However, when the size of the ink droplets is reduced, the image density tends to decrease. A decrease in image density can be suppressed by increasing the pigment concentration, but on the other hand, this increase in pigment concentration easily leads to problems such as a decrease in the storage stability of the ink and a decrease in chroma due to aggregation of pigment components.

In addition, in a case in which printing by the inkjet method is expanded and developed to include not only printing on plain paper but also printing on a recording medium that is poorly ink-absorbent or non-ink-absorbent such as coated paper, the fixability of the ink and the image fastness must be improved so that the printed image does not detach due to rubbing, moisture, or the like, and more specifically, the abrasion resistance must be improved. From such a viewpoint, a conceivable measure is to further include a binder component in the ink, but doing so is problematic in that the chroma of the printed matter decreases, and thus there is still room for improvement in the ink set and the like disclosed in Patent Document 2.

Thus, an object of the present invention is to provide an ink set that exhibits excellent chroma of primary and secondary colors, especially the chroma of green, and also exhibits excellent abrasion resistance of a printed image.

As a result of intensive studies, the present inventors discovered that the above problems can be solved by using specific pigments in specific concentration ranges in both the cyan and yellow inks, and preferably by further containing a specific binder in the inks, and thereby the present inventors arrived at the present invention.

**SOLUTION TO PROBLEM**

The present invention includes the following aspects.

[1] An ink set including:

a yellow ink containing a binder, a dispersing resin, an aqueous solvent, and C.I. Pigment Yellow 74 as a pigment; and
a cyan ink containing a binder, a dispersing resin, an aqueous solvent, and C.I. Pigment Blue 15:3 as a pigment, wherein
the C.I. Pigment Yellow 74 has a volume-average particle size of from 80 to 120 nm and a content of from 4.0 to 10.0 mass% in relation to a total amount of the yellow ink, and
the C.I. Pigment Blue 15:3 has a volume-average particle size of from 80 to 100 nm and a content exceeding 2.5 mass% and less than 5.5 mass% in relation to a total amount of the cyan ink.

[2] The ink set according to [1], wherein

a minimum film-forming temperature of the binder is 25°C or higher, and
a volume-average particle size of the binder is equal to or less than the volume-average particle size of the C.I. Pigment Yellow 74 and/or the volume-average particle size of the C.I. Pigment Blue 15:3.

[3] The ink set according to [1] or [2], further including a magenta ink containing a binder, a dispersing resin, an aqueous solvent, and a solid solution pigment, wherein

the solid solution pigment includes C.I. Pigment Red 122 and C.I. Pigment Violet 19,
a mass ratio of the C.I. Pigment Red 122 to the C.I. Pigment Violet 19 in the solid solution pigment is from 4/1 to 1/1,
the solid solution pigment has a volume-average particle size of from 90 to 130 nm, and
a ratio of a concentration of the solid solution pigment contained in the magenta ink to a concentration of the pigment contained in the cyan ink is 1.5 or greater.

[4] The ink set according to any one of [1] to [3], further including a black ink.

**ADVANTAGEOUS EFFECTS OF INVENTION**

According to the present invention, provided is an ink set that exhibits excellent chroma of primary and secondary colors, especially the chroma of green, and also exhibits excellent abrasion resistance of a printed image.

**DESCRIPTION OF EMBODIMENTS**

The present invention is an ink set including a yellow ink containing a binder, a dispersing resin, an aqueous solvent, and C.I. Pigment Yellow 74 as a pigment; and a cyan ink containing a binder, a dispersing resin, an aqueous solvent, and C.I. Pigment Blue 15:3 as a pigment, wherein

the C.I. Pigment Yellow 74 has a volume-average particle size of from 80 to 120 nm and a content of from 4.0 to 10.0 mass% in relation to a total amount of the yellow ink, and
the C.I. Pigment Blue 15:3 has a volume-average particle size of from 80 to 100 nm and a content exceeding 2.5 mass% and less than 5.5 mass% in relation to a total amount of the cyan ink.

The ink set of the present invention is excellent in the chroma of primary and secondary colors. In particular, the chroma (c*) of green can be improved without decreasing the color development of the chroma of the secondary colors of blue and red.
Moreover, in the ink set of the present invention, the minimum film-forming temperature of the binder is preferably 25°C or higher, and the volume-average particle size of the binder is preferably equal to or less than the volume-average particle size of the C.I. Pigment Yellow 74 and/or the volume-average particle size of the C.I. Pigment Blue 15:3, and thereby the printed image is excellent in abrasion resistance.
Each component of the ink set of the present invention is described below.

Yellow Ink

In the ink set of the present invention, the pigment contained in the yellow ink is C.I. Pigment Yellow 74. The content of the C.I. Pigment Yellow 74 in relation to the total amount of the yellow ink is from 4.0 to 10.0 mass%, and is more preferably in a range from 4.5 to 9.0 mass%.

The volume-average particle size of the C.I. Pigment Yellow 74 is from 80 to 120 nm, and more preferably in a range from 90 to 110 nm. The volume-average particle size of the C.I. Pigment Yellow 74 is determined by a general method for measuring pigment dispersion particles, such as a dynamic light scattering method or a laser diffraction method. For example, in the case of the dynamic light scattering method, pigment particles in a dispersion are measured using the Nanotrac Wave II (available from Microtrac Retsch GmbH), which is a laser scattering particle size measuring device, with the dilution factor adjusted so that the loading index value becomes 1, the measurement time set to 180 seconds, and the number of repeated measurements set to 3, and thereby the volume-average particle size of the C.I. Pigment Yellow 74 can be measured.

The binder contained in the yellow ink is used for the purpose of fixing the pigment in the ink to the recording medium. Unlike the dispersing resin described below, the binder is not adsorbed on the surface of the pigment or the like in the ink, but rather is dispersed in the aqueous solvent and present in the ink, separate from the pigment and the dispersing resin.

The minimum film-forming temperature of the binder is preferably 25°C or higher, and while dependent on the glass transition temperature of the components constituting the binder, the minimum film-forming temperature of the binder is usually more preferably in a range from 25°C to 60°C, and even more preferably in a range from 30°C to 45°C. When the minimum film-forming temperature of the binder is within the above range, film formation effectively advances under general drying conditions, and the abrasion resistance is excellent.

The volume-average particle size of the binder is preferably equal to or smaller than the volume-average particle size of C.I. Pigment Yellow 74, which is a pigment constituting the yellow ink, and/or the volume-average particle size of C.I. Pigment Blue 15:3, which is a pigment constituting the cyan ink, and is more preferably equal to or smaller than the volume-average particle sizes of both.

More specifically, the volume-average particle size of the binder is preferably 100 nm or less, and more preferably in a range from 40 to 80 nm. When the volume-average particle size of the binder is within the range described above, aggregation of the pigments in the ink is suppressed, dispersion stability is increased, ejection stability and storage stability can be improved, and the abrasion resistance of the printed image can be improved.

The volume-average particle size of the binder is determined by a general method for measuring dispersed particles, such as a dynamic light scattering method or a laser diffraction method. For example, in the case of the dynamic light scattering method, the volume-average particle size of the binder can be measured using the Nanotrac Wave II (available from Microtrac Retsch GmbH), which is a laser scattering particle size measuring device, with the dilution factor adjusted so that the loading index value becomes 1, the measurement time set to 180 seconds, and the number of repeated measurements set to 3.

Examples of the binder include polyvinyl alcohol, gelatin, polyethylene oxide, polyvinylpyrrolidone, acrylic-based resins, urethane-based resins, olefin-based resins, modified polyolefin resins (acid-modified polypropylene and the like), dextran, dextrin, carrageenan ($\kappa$, $\iota$, $\lambda$, and the like), agar, pullulan, water-soluble polyvinyl butyral, hydroxyethyl cellulose, and carboxymethyl cellulose. A single type of these binders may be used alone, or two or more types thereof may be used in combination.

As the binder, for example, a vinyl polymer (A) can be used with the vinyl polymer (A) being a vinyl polymer (A1) having a structural unit derived from an aromatic vinyl monomer and having a glass transition temperature (Tg) of from 50 to 100°C, or being a halogenated vinyl polymer (A2) having a Tg of from 50 to 100°C.

Examples of the vinyl polymer (A1) include copolymers having a structural unit derived from an aromatic vinyl monomer and a structural unit derived from a (meth)acrylic monomer. Examples of the aromatic vinyl monomer include styrene, $\alpha$-methylstyrene, o-methylstyrene, m-methylstyrene, and p-methylstyrene, and among these, styrene is preferable. Examples of the (meth)acrylic monomer include (meth)acrylic acid; and (meth)acrylates such as methyl (meth) acrylate, ethyl (meth)acrylate, propyl (meth)acrylate, butyl (meth)acrylate, pentyl (meth)acrylate, neopentyl (meth) acrylate, hexyl (meth)acrylate, 2-ethylhexyl (meth)acrylate, and octyl (meth)acrylate. The vinyl polymer (A1) is preferably a styrene-acrylic resin.

The content of the structural unit derived from the aromatic vinyl monomer in relation to the total amount of the vinyl polymer (A1) is preferably in a range from 50 to 99 mass%, and more preferably from 80 to 99 mass%. Moreover, the content of the structural unit derived from the (meth)acrylic monomer in relation to the total amount of the vinyl polymer (A1) is preferably in a range from 1 to 50 mass%, and more preferably from 1 to 20 mass%.

Examples of the halogenated vinyl polymer (A2) include vinyl chloride (co)polymers, chlorinated polyolefins, and chlorinated rubbers, and a vinyl chloride-acrylic polymer having a structural unit derived from a vinyl chloride monomer and a structural unit derived from a (meth)acrylic monomer is preferable. The (meth)acrylic monomer is as described above.

The content of the structural unit derived from a vinyl chloride monomer in relation to the total amount of the halogenated vinyl polymer (A2) is preferably in a range from 30 to 90 mass%, and more preferably in a range from 50 to 80 mass%. Moreover, the content of the structural unit derived from the (meth)acrylic monomer in relation to the total amount of the halogenated vinyl polymer (A2) is preferably in a range from 10 to 70 mass%, and more preferably in a range from 20 to 50 mass%.

The vinyl polymer (A) can be produced by an emulsion polymerization method, a solution polymerization method, a suspension polymerization method, a bulk polymerization method, or the like. A vinyl polymer (A) having a core-shell structure is more preferable. Examples thereof include a vinyl polymer having a core-shell structure in which a structural unit derived from an aromatic vinyl monomer or a structural unit derived from a vinyl chloride monomer is localized in a core portion and a structural unit derived from a (meth)acrylic monomer is localized in a shell portion. The vinyl polymer (A) having a core-shell structure can be produced, for example, by polymerizing a monomer component containing a (meth) acrylic monomer to produce a polymer (x) constituting a shell, and then supplying an aromatic vinyl monomer or the like to a reaction vessel and polymerizing the aromatic vinyl monomer within the particles of the polymer (x) to thereby form the core portion.

A commercially available product may be used as the vinyl polymer (A). Examples thereof include "JONCRYL PDX-7700", "JONCRYL PDX-7780", "JONCRYL 89-E", and "JONCRYL 89J" (JONCRYL being a trade name, available from BASF Japan Ltd.); "HIROS-X BE7503" (available from Seiko PMC Corporation), and "VINYBLAN 745" and "VINYLBLAN 747" (available from Nissin Chemical Industry Co., Ltd.).

Amongst the binders described above, the binder is more preferably a styrene-acrylic resin from the viewpoints of improving the ejection stability of the ink and improving the printing density and the image fastness of the obtained printed matter at a low cost.

The weight average molecular weight (Mw) of the binder is preferably from 100000 to 1000000, and more preferably from 300000 to 750000. The Mw of the binder is a value measured by gel permeation chromatography (GPC) calibrated with standard polystyrene, and is determined according to the measurement conditions described below by a GPC-MALS method in which a multi-angle light scattering (MALS) detector is connected to a gel permeation chromatograph (GPC).

> GPC body: LC1100 series available from Agilent Technologies, Inc.
> Column: SHODEX SB806MHQ available from Showa Denko K.K.
> Eluent: N/3 phosphate buffer containing N/10 sodium nitrate (pH3)
> Flow rate: 1.0 mL/min.
> Detector 1: Multi-angle light scattering detector DAWN available from Wyatt Technology Corporation
> Detector 2: Differential refractive index detector RI-101 available from Showa Denko K.K.

The acid number of the binder is preferably 50 mgKOH/g or less, more preferably in a range from 10 to 50 mgKOH/g, and still more preferably in a range from 10 to 30 mgKOH/g.

The content of the binder in relation to the total amount of the yellow ink is preferably in a range from 0.4 to 3.0 mass%, and more preferably in a range from 0.4 to 1.5 mass%. When the content of the binder is within the above range, the ejection stability and storage stability of the ink are improved. In addition, the image fastness of the printed matter can be further improved, and even when water is dropped onto the printed matter or when the printed matter is rubbed with a cloth or the like containing water, the printed matter tends to excel in abrasion resistance with the ink not detaching therefrom.

The dispersing resin contained in the yellow ink functions as a stable pigment dispersion means and has a role of adsorbing the dispersing resin onto the surface of the pigment and dispersing and stabilizing the pigment in water and solvent components other than the water through steric hindrance or electrostatic repulsion. Unlike the above-described binder, the dispersing resin is present in a state of being adsorbed on the surface of the pigment or covering some or all of the surface of the pigment. The dispersing resin corresponds to the solid content of the yellow ink.

Examples of the dispersing resin include aqueous resins of polyvinyl alcohols, polyvinylpyrrolidones, acrylic resins such as acrylic acid-acrylate copolymers, styrene-acrylic resins such as styrene-acrylic acid copolymers, styrene-methacrylic acid copolymers, styrene-methacrylic acid-acrylate copolymers, styrene-$\alpha$-methylstyrene-acrylic acid copolymers, and styrene-$\alpha$-methylstyrene-acrylic acid-acrylate copolymers, styrene-maleic acid copolymers, styrene-maleic anhydride copolymers, and vinylnaphthalene-acrylic acid copolymers, as well as salts of these aqueous resins.

A commercially available product can be used as the dispersing resin, and examples thereof include products of the "Ajisper (trade name)" PB series available from Ajinomoto Fine-Techno Co., Inc., products of the "DISPER (trade name) BYK" series available from BYK-Chemie GmbH, products of the "EFKA (trade name)" series available from BASF SE, products of the "SOLSPERSE (trade name)" series available from Lubrizol Japan Ltd., and products of the "TEGO (trade name) Dispers" series available from Evonik Industries AG. Furthermore, compounds exemplified as the polymer (G) in WO 2018/190139 can also be used as the dispersing resin. These dispersing resins may be subjected to a crosslinking treatment with a crosslinking agent after dispersion of the pigments.

Among the above-described dispersing resins, a styrene-acrylic resin is preferable as the dispersing resin, and a styrene-acrylic-based random copolymer resin is more preferable.

The weight average molecular weight (Mw) of the dispersing resin is preferably from 5000 to 50000 and more preferably from 10000 to 30000. The Mw of the dispersing resin is a value measured by gel permeation chromatography (GPC) calibrated with standard polystyrene, and is determined by the same measurement method as the above-described method used to measure the weight average molecular weight of the binder.

The acid number of the dispersing resin is preferably 50 mgKOH/g or greater, preferably in a range from 80 to 200 mgKOH/g, and more preferably in a range from 90 to 150 mgKOH/g.

The content of the dispersing resin in relation to the total amount of the yellow ink is preferably in a range from 0.5 to 2.5 mass% and more preferably in a range from 0.8 to 2.0 mass%.

The aqueous solvent constituting the yellow ink preferably contains one or more types of aqueous solvents having, as Hansen solubility parameters (HSP), a polarity term ($\delta_P$) of 9 or less and a hydrogen bonding term ($\delta_H$) of 18 or less. In a case in which such an aqueous solvent is contained, the content thereof in relation to the total amount of the yellow ink is preferably in a range from 0.1 mass% to less than 4.0 mass%, more preferably in a range from 0.3 to 3.5 mass%, and still more preferably in a range from 0.3 to 1.5 mass%. When these aqueous solvents are contained, aggregation of the pigments is suppressed, and the wettability of the pigment surface can be enhanced, and thus it is considered that the dispersion stability is excellent.

Here, the Hansen solubility parameters are parameters that take into account the polarity of a substance and are expressed in three-dimensional space by dividing the solubility parameter (SP value: $\delta$) introduced by Hildebrand into three components including a dispersion term $\delta_D$, a polarity term $\delta_P$, and a hydrogen bonding term $\delta_H$, and the following equational relationship therebetween holds true.

$$\delta[(cal/cm^3)^{0.5}] = (\delta_D{}^2 + \delta_P{}^2 + \delta_H{}^2)^{0.5}$$

Many of the above dispersion term $\delta_D$, polarity term $\delta_P$, and hydrogen bonding term $\delta_H$ have been determined by Hansen and subsequent researchers, and the terms thereof are described in, for example, the Polymer Handbook (4th Edition), VII-698 to 711. The Hansen solubility parameters for many solvents and resins have also been investigated and are described in, for example, the Industrial Solvents Handbook (by Wesley L. Archer). The solubility parameters can also be determined using the Hansen Solubility Parameters in Practice (HSPiP) software.

The polarity term of the HSP of the aqueous solvent described above is preferably from 3 to 9, and more preferably from 4 to 7. Moreover, the hydrogen bonding term of the HSP of the aqueous solvent described above is preferably from 3 to 18, and more preferably from 4 to 17.5. When both the polarity term and the hydrogen bonding term of the HSP satisfy the ranges described above, it is considered that the wettability of the pigment surface in the yellow ink is further improved, and the dispersion stability is excellent.

From the viewpoints of the ejection stability of the ink and preventing drying of the inkjet ink on an ejection nozzle of an inkjet head, the boiling point of the above-described aqueous solvent under atmospheric pressure is preferably 150°C or higher, and is more preferably in a range from 150°C to 350°C.

Examples of such an aqueous solvent include 3-methoxy-3-methyl-1-butanol ($\delta_P$ = 6.3, $\delta_H$ = 12.9, boiling point of 174°C), 3-methoxy-1-butanol ($\delta_P$ = 5.4, $\delta_H$ = 13.6, boiling point of 158°C), and 1,2-hexanediol ($\delta_P$ = 6.6, $\delta_H$ = 17.1, boiling point of 223°C).

The water contained in the yellow ink is preferably pure water or ultrapure water from which impurities such as ionic impurities have been removed as much as possible. Examples of such pure water or ultrapure water include ion-exchanged water, ultra-filtered water, reverse osmosis water, and distilled water. The water may be sterilized by ultraviolet irradiation, the addition of hydrogen peroxide, or the like.

From the viewpoints of ejection stability and the property (drying property) of being able to be rapidly dried on the surface of the recording medium after printing, the water content is preferably in a range from 30 to 90 mass% and more preferably in a range from 40 to 80 mass% in relation to the total amount of the yellow ink.

The yellow ink may contain an aqueous solvent other than the above-described aqueous solvent. The other aqueous solvent can have a role of adjusting the viscosity of the ink, a role of further improving the ejection stability when printing is implemented by the inkjet printing method, a role of preventing the inkjet ink from drying in the ejection nozzle of the inkjet head, a role of adjusting the drying property described above, and the like.

Examples of other aqueous solvents include ethylene glycol, diethylene glycol, triethylene glycol, polyethylene glycol having a molecular weight of 2000 or less, propylene glycol, dipropylene glycol, tripropylene glycol, isopropylene glycol, isobutylene glycol, 1,3-propanediol, 2-methyl-1,3-propanediol, 1,4-butanediol, 1,3-butanediol, 3-methyl-1,3-butanediol, 1,5-pentanediol, 3-methyl-1,5-pentanediol, 2-methyl-2,4-pentanediol, 1,2-hexanediol, 1,6-hexanediol, meso-erythritol, pentaerythritol, and glycerin. Among these, a solvent having a boiling point in a range from 180 to 300°C is preferable, and propylene glycol or glycerin is more preferable. In addition, use of propylene glycol and glycerin in combination as the other aqueous solvent is preferable because aggregation and precipitation of the pigments in the ink are less likely to occur, the viscosity can be adjusted to a desired viscosity while maintaining the dispersion stability, and the ejection stability when printing is implemented by the inkjet printing method and the drying property of the ink after printing can both be easily improved.

The content of the other aqueous solvent is preferably in a range from 0.1 to 35 mass% and more preferably in a range from 15 to 35 mass% in relation to the total amount of the yellow ink.

Cyan Ink

The pigment contained in the cyan ink is C.I. Pigment Blue 15:3. The content of the C.I. Pigment Blue 15:3 in relation to the total amount of the cyan ink is from greater than 2.5 mass% to less than 5.5 mass%, more preferably in a range from 2.7 to 5.3 mass%, and still more preferably in a range from 3.0 to 4.0 mass%.

The volume-average particle size of the C.I. Pigment Blue 15:3 is from 80 to 100 nm, and more preferably from 85 to 95 nm. The volume-average particle size of the C.I. Pigment Blue 15:3 is determined by a general method for measuring pigment dispersion particles, such as a dynamic light scattering method or a laser diffraction method, and an example of the measurement method is the same as the measurement method described above for measuring the volume-average particle size of the C.I. Pigment Yellow 74.

The binder contained in the cyan ink is the same as the binder contained in the yellow ink, and the details thereof are as described above. The content of the binder in the cyan ink is preferably in a range from 0.4 to 3.0 mass% and more preferably in a range from 0.4 to 1.5 mass% in relation to the total amount of the cyan ink. When the content of the binder is within the above range, the ejection stability and storage stability of the ink are improved. In addition, the image fastness of the printed matter can be further improved, and even when water is dropped onto the printed matter or when the printed matter is rubbed with a cloth or the like containing water, the printed matter tends to excel in abrasion resistance with the ink not detaching therefrom.

The dispersing resin contained in the cyan ink is the same as the dispersing resin contained in the yellow ink, and the details thereof are as described above. The content of the dispersing resin in the cyan ink is preferably in a range from 0.3 to 2.5 mass% and more preferably in a range from 0.5 to 2.0 mass% in relation to the total amount of the cyan ink.

The aqueous solvent contained in the cyan ink is the same as the aqueous solvent contained in the yellow ink, and the details thereof are as described above. Suitable content amounts of the aqueous solvent and water are also the same as in the case of the yellow ink.

In the ink set of the present invention, when the content of the pigment (C.I. Pigment Yellow 74) in the yellow ink and the content of the pigment (C.I. Pigment Blue 15:3) in the cyan ink satisfy both the above-described ranges, the obtained printed matter exhibits excellent chroma of primary and secondary colors while ensuring dispersion stability of the pigments as well as ejection stability, storage stability, and sufficient printing density. In particular, the chroma (c*) of green can be improved without decreasing the chroma of the secondary colors of blue and red.

Magenta Ink

The ink set of the present invention may further include a magenta ink. The pigment contained in the magenta ink is a solid solution pigment composed of C.I. Pigment Red 122 and C.I. Pigment Violet 19. Commercially available products can be used for each of these pigments.

The mass ratio of the C.I. Pigment Red 122 to the C.I. Pigment Violet 19 ((C.I. Pigment Red 122)/(C.I. Pigment Violet 19)) in the solid solution pigment is from 4/1 to 1/1, and is more preferably in a range from 3.5/1 to 2.5/1. When the mass ratio of the C.I. Pigment Red 122 and the C.I. Pigment Violet 19 is within the above-described range, the chroma of red is excellent.

The method for producing the solid solution pigment is not particularly limited, and known methods disclosed in, for example, JP 11-49998 A, JP 2000-319534 A, and JP 2003-253150 A can be applied. In the present specification, the term solid solution pigment refers to a pigment that is present in the form of a mixed crystal of a plurality of pigment molecules (a state of being crystallized in a mixed state), and differs from a simple mixture of two or more pigments. Whether the solid solution pigment is formed can be confirmed by X-ray diffraction analysis. In the case of a mixture of two types of pigments, a pattern corresponding to the superposition of the X-ray diffraction patterns of the respective pigments is obtained as the X-ray diffraction pattern, and the peak intensity is proportional to the blending ratio. On the other hand, when a solid solution pigment is formed, a diffraction pattern unique to the formed crystal is exhibited.

The content of the solid solution pigment in relation the total amount of the magenta ink is from 4.0 to 10.0 mass%, and more preferably in a range from 5.0 to 9.0 mass%.

The volume-average particle size of the solid solution pigment is from 80 to 150 nm, and more preferably in a range from 90 to 130 nm. The volume-average particle size of the solid solution pigment is determined by a general method for measuring pigment dispersion particles, such as a dynamic light scattering method or a laser diffraction method, and an example of the measurement method is the same as the measurement method described above for measuring the volume-average particle size of the C.I. Pigment Yellow 74.

The binder contained in the magenta ink is the same as the binder contained in the yellow ink and the cyan ink, and the details thereof are as described above. The content of the binder in the magenta ink is preferably in a range from 0.4 to 3.0 mass% and more preferably in a range from 0.4 to 1.5 mass% in relation to the total amount of the magenta ink. When the content of the binder is within the above range, the ejection stability and storage stability of the ink are improved. In addition, the image fastness of the printed matter can be further improved, and even when water is dropped onto the printed matter or when the printed matter is rubbed with a cloth or the like containing water, the printed matter tends to excel in abrasion resistance with the ink not detaching therefrom.

The dispersing resin contained in the magenta ink is the same as the dispersing resin contained in the yellow ink and the cyan ink, and the details thereof are as described above. The content of the dispersing resin in the magenta ink is preferably in a range from 0.3 to 2.5 mass% and more preferably in a range from 0.5 to 2.0 mass% in relation to the total amount of the magenta ink.

The aqueous solvent contained in the magenta ink is the same as the aqueous solvent contained in the yellow ink and the cyan ink, and the details thereof are as described above. Suitable contents of the aqueous solvent and water are also the same as in the case of the yellow ink and the cyan ink.

When the ink set of the present invention further includes a magenta ink, the ratio of the concentration of the solid solution pigment contained in the magenta ink to the concentration of the pigment contained in the cyan ink (concentration ratio of magenta/cyan) is preferably 1.5 or greater, and more preferably in a range from 1.5 to 3.0. When the magenta/cyan concentration ratio is within the above-described range, the balance of the chroma of secondary colors tends to be excellent.

Black Ink

The ink set of the present invention may further include a black ink. The coloring material of the black ink is not particularly limited. As an inorganic pigment, for example, iron oxide, or carbon black produced by a method such as a contact method, a furnace method, or a thermal method can be used.

Examples of black pigments include C.I. Pigment Black 1, 6, 7, 8, 10, 26, 27, and 28, and specific examples of commercially available black pigments include No. 2300, No. 2200B, No. 900, No. 960, No. 980, No. 33, No. 40, No. 45, No. 45L, No. 52, MCF88, MA7, MA8, and MA100 available from Mitsubishi Chemical Corporation; Raven 5750, Raven 5250, Raven 5000, Raven 3500, Raven 1255, and Raven 700 available from Columbia Coatings, LLC; Regal 400R, Regal 330R, Regal 660R, Mogul L, Mogul 700, Monarch 800, Monarch 880, Monarch 900, Monarch 1000, Monarch 1100, Monarch 1300, and Monarch 1400 available from Cabot Corporation; Color Black FW1, Color Black FW2, Color Black FW2V, Color Black FW18, Color Black FW200, Color Black S150, Color Black S160, Color Black S170, Printex 35, Printex U, Printex V, Printex 1400U, Special Black 6, Special Black 5, Special Black 4, and Special Black 4A available from Degussa AG; and NIPex 150, NIPex 160, NIPex 170, and NIPex 180 available from Orion Engineered Carbons S.A.

Details and preferable content ranges of the binder, the dispersing resin, and the aqueous solvent contained in the black ink are the same as those described above for the magenta ink.

In addition, as the black pigment, a self-dispersing pigment in which a dispersibility-imparting group (a hydrophilic functional group and/or a salt thereof) or an active species having a dispersibility-imparting group is bonded (grafted) to the surface of the pigment either directly or indirectly via an alkyl group, an alkyl ether group, an aryl group, or the like may be used. Examples of industrially produced and commercially available self-dispersing pigments include Microjet CW-1, BONJET BLACK CW-1, BONJET BLACK CW-1S, BONJET BLACK CW-2, and BONJET BLACK CW-3 (trade names; available from Orient Chemical Industries Co., Ltd.), CAB-O-JET 200 and CAB-O-JET 300 (trade names; available from Cabot Corporation), and SENSIJET Black SDP100, SENSIJET Black SDP1000, and SENSIJET Black SDP2000 (trade names; available from Sensient Technologies Corporation). When a self-dispersing pigment is used, the above-described dispersing resin is not necessary.

Each ink constituting the ink set of the present invention may further contain a surfactant. When the surfactant is contained, after the ink ejected from an ejection port of the inkjet head lands on the object to be printed, the ink wets the surface and easily spreads thereon, and the occurrence of printing defects is easily prevented. In addition, the surface tension of the ink is easily reduced, and the leveling property of the ink is easily improved.

Examples of the surfactant include anionic surfactants, nonionic surfactants, cationic surfactants, and amphoteric surfactants, and anionic surfactants or nonionic surfactants are preferable.

Examples of the anionic surfactants include alkylbenzene sulfonates, alkylphenyl sulfonates, alkylnaphthalene sulfonates, higher fatty acid salts, sulfates or sulfonates of higher fatty acid esters, sulfates or sulfonates of higher alcohol ethers, higher alkyl sulfosuccinates, polyoxyethylene alkyl ether carboxylates, polyoxyethylene alkyl ether sulfates, and phosphates or alkyl phosphates.

Examples of the nonionic surfactants include glycol-based surfactants, silicone-based surfactants, fluorine-based surfactants, and acetylenediol-based surfactants.

Examples of the glycol-based surfactants include polyoxyethylene alkyl ethers, polyoxyethylene alkylaryl ethers, polyoxyethylene fatty acid esters, polyoxyethylene sorbitan fatty acid esters, polyoxyethylene sorbitol fatty acid esters, polyoxyethylene glycerin fatty acid esters, polyglycerin fatty acid esters, polyoxyethylene alkylamines, polyoxyethylene fatty acid amides, and polyoxyethylene-polyoxypropylene block copolymers.

Examples of the silicone-based surfactants include polysiloxane-based compounds and polyether-modified organosiloxanes. Examples of commercially available products of the silicone-based surfactants include surfactants of the "BYK (trade name)" series available from BYK Chemie Japan KK, and surfactants of the "KF" series available from Shin-Etsu Chemical Co., Ltd.

Examples of the fluorine-based surfactants include perfluoroalkyl carboxylate, perfluoroalkyl sulfonates, oxyethylene perfluoroalkyl ethers, perfluoroalkyl phosphates, perfluoroalkyl betaines, and perfluoroalkyl amine oxides. Examples of commercially available products of the fluorine-based surfactants include surfactants of the "Megaface (trade name)" series available from DIC Corporation, surfactants of the "Ftergent (trade name)" series available from Neos Co., Ltd., and surfactants of the "Novec (trade name)" series available from Sumitomo 3M Ltd.

The acetylenediol-based surfactant is a surfactant having a carbon-carbon triple bond in the molecule, and examples thereof include acetylenediol (having an acetylene bond and two hydroxyl groups in the same molecule) surfactants and surfactants obtained by adding an alkylene oxide such as ethylene oxide or propylene oxide to acetylenediol. Examples thereof include alkylene oxide adducts of 2,4,7,9-tetramethyl-5-decyne-4,7-diol and 2,4,7,9-tetramethyl-5-decyne-4,7-diol, and alkylene oxide adducts of 2,4-dimethyl-5-decyne-4-ol and 2,4-dimethyl-5-decyne-4-ol. Examples of commercially available products of the acetylenediol-based surfactant include surfactants of the "Surfynol (trade name)" series available from Evonik Industries AG, surfactants of the "Olfine (trade name)" series available from Nissin Chemical Industry Co., Ltd., and surfactants of the "Acetylenol (trade name)" series available from Kawaken Fine Chemicals Co., Ltd.

Among these, an acetylenediol-based surfactant is more preferable from the viewpoint of easily preventing the occurrence of printing defects.

The hydrophilic-lipophilic balance (HLB) value of the surfactant is preferably 15 or less, and more preferably 10 or less. The HLB value of the surfactant is also preferably from 2.5 or greater, and more preferably 3.5 or greater. When the HLB value of the surfactant is within the above-described range, the wettability of the pigment surface is increased, the dispersion stability is improved, and the ejection stability and storage stability of the ink are further improved. The HLB value of the surfactant is more preferably in a range from 3.5 to 9.

Here, the "HLB value" of the surfactant is a value defined by the following equation (Griffin equation) according to the Griffin method.

HLB value = 20 × [sum of molecular mass of hydrophilic portion]/(molecular mass)

When each ink constituting the ink set of the present invention further contains a surfactant, the content of the surfactant is preferably in a range from 0.01 to 5 mass%, and more preferably in a range from 0.1 to 2 mass%, in relation to the total amount of each ink.

A single type of surfactant may be used alone, or two or more types thereof may be used in combination.

As necessary, each ink constituting the ink set of the present invention may further contain, in addition to the components described above, other additives such as a pH adjuster, a preservative, a polyolefin wax, an antioxidant, a viscosity modifier, a wetting agent (drying inhibitor), a penetrant, a chelating agent, a plasticizer, and an ultraviolet absorber.

Examples of the pH adjuster include potassium dihydrogen phosphate, disodium hydrogen phosphate, sodium hydroxide, lithium hydroxide, potassium hydroxide, ammonia, diethanolamine, triethanolamine, triisopropanolamine, potassium carbonate, sodium carbonate, and sodium bicarbonate.

Examples of the preservative include sodium benzoate, sodium pentachlorophenol, sodium 2-pyridinethiol-1-oxide, sodium sorbate, sodium dehydroacetate, and 1,2-dibenzisothiazolin-3-one. A commercially available product may be used as the preservative, and examples thereof include "ACTICIDE (trade name) B20" (available from Tosoh Corporation) and "PROXEL (trade name) GXL" (available from SC Johnson & Son Inc.).

Examples of the polyolefin wax include a wax or copolymer produced from an olefin such as ethylene, propylene, or butylene or a derivative thereof, and examples thereof include a polyethylene wax, a polypropylene wax, a polybutylene wax, and modified waxes thereof. Among these, an oxidized polyethylene wax obtained by subjecting a polyethylene wax to an oxidation modification treatment is preferable from the viewpoint of improving the image fastness of a printed matter. A commercially available product may be used as the polyolefin wax, and examples thereof include products of the "AQUACER (trade name)" series (available from BYK Chemie Japan KK).

Examples of the antioxidant include phenol-based antioxidants, amine-based antioxidants, phosphorus-based antioxidants, and sulfur-based antioxidants. When each ink constituting the ink set of the present invention further contains another additive, the amount thereof is preferably in a range from 0.01 to 5 mass% and more preferably in a range from 0.02 to 3 mass% in relation to the total amount of each ink.

The method for preparing each ink constituting the ink set of the present invention is not particularly limited, and each ink can be prepared by mixing the above-described components. The above-described components may be mixed all at once or sequentially. For example, the binder may be dissolved or dispersed in water or another solvent prior to mixing. The pigments may be mixed after being dispersed in water or another solvent together with the dispersing resin. At the time of mixing, a disperser such as a bead mill, an ultrasonic homogenizer, a high-pressure homogenizer, a paint shaker, a ball mill, a roll mill, a sand mill, a sand grinder, a Dyno-mill, a Dispermat, an SC mill, or a Nanomizer can be used.

From the viewpoints of excelling in storage stability and ejection stability, reducing deviations in the landing positions on the recording medium caused by flight deflection when the inkjet recording method is used, and easily suppressing the occurrence of streaks on the printed matter, the viscosity at 25°C of each of the inks constituting the ink set of the present invention is preferably in a range from 2.0 to 12.0 mPa·s, more preferably in a range from 2.5 to 5.0 mPa·s, and even more preferably in a range from 3.0 to 4.0 mPa·s. The viscosity of the ink is measured under the following conditions using, for example, a cone-plate type rotational viscometer equivalent to an E-type viscometer.

Measurement device: TVE-25 type viscometer (TVE-25L, available from Toki Sangyo Co., Ltd.)
Calibration standard solution: JS20
Measurement temperature: 25°C
Rotational speed: from 10 to 100 rpm
Injection volume: 1200 μL

The surface tension at 25°C of each ink constituting the ink set of the present invention is preferably 20 mN/m or greater, and more preferably 25 mN/m or greater. The surface tension thereof is also preferably 40 mN/m or less, and more preferably 35 mN/m or less. When the surface tension is within this range, in a case in which the ink set is used in an inkjet recording method, the ink wettability of the ejected liquid droplets on the surface of the recording medium is good, and the ink tends to exhibit sufficient wetting and spreading after landing.

From the viewpoints of improving the storage stability and ejection stability of the ink, and improving the wet-spreading property, the printing density, and the image fastness when printed on a recording medium, and from the viewpoint of suppressing a deterioration of members (ink ejection ports, ink flow paths, and the like) configuring an ink application or ejection device, the pH at 25°C of each ink constituting the ink set of the present invention is preferably from 7.0 to 11.0, and more preferably from 7.5 to 10.5.

The ink set of the present invention can be used in various inkjet recording methods such as a thermal jet method, a piezo method, a continuous inkjet method, a roller application, and a spray application, and can be used in recording devices in which these recording methods are applied.

Examples of the recording medium to which the droplets of the ink set of the present invention are adhered include plain paper as well as cast glossy paper obtained by coating the surface of plain paper to form an ink-receiving layer having excellent surface gloss by a casting method, and thereby imparting glossiness to the surface, and a polymer-coated glossy paper having formed therein an inkjet recording layer containing a resin as a main component.

The ink set of the present invention was described above, but the present invention is not limited to the configuration of the embodiment described above. For example, the ink set of the present invention may additionally have any other optional configurations in the configuration of the embodiment described above, or may be substituted with any optional configuration that exhibits the same function.

**EXAMPLES**

The present invention will be specifically described through examples below. However, the present invention is not limited to the following examples. Pigments, compounds and the like used in the present examples and the like are presented below.

Pigments

Yellow: C.I. Pigment Yellow 74 ("Hansa Yellow 5GX01" (trade name, available from Clariant AG, volume-average particle size: 90 nm)
Cyan: C.I. Pigment Blue 15:3 ("FASTOGEN BLUE SBG-SD" (trade name, available from DIC Corporation, volume-average particle size: 90 nm)
Magenta: solid solution pigment containing C.I. Pigment Red 122 and C.I. Pigment Violet 19 at a mass ratio of 3/1 (available from DIC Corporation, volume-average particle size: 110 nm)

Aqueous Solvent

PG: propylene glycol ($\delta_P$ = 10.4, $\delta_H$ = 21.3, boiling point of 188°C)
Gly: glycerin ($\delta_P$ = 11.3, $\delta_H$ = 27.2, boiling point of 290°C)

Binder

Binder 1: styrene-acrylic resin (MFT: 36°C, volume-average particle size: 60 nm, Mw: 500000, acid number: 20 mgKOH/g, available from DIC Corporation)

Surfactant

SF420: "Surfynol 420" (trade name, available from Evonik Industries AG, HLB value = 4)

Preservative

B20: "ACTICIDE B20" (trade name, available from Thor Japan Ltd.)

Dispersing Resin

Styrene-acrylic random copolymer resin (Mw: 18000, acid number: 110 mgKOH/g)

Preparation of Pigment Dispersion

Pigment Dispersion Y (Yellow)

An intensive mixer (available from Nippon Eirich Co., Ltd.) having a volume of 1.0 L was charged with 150 g of the yellow pigment, 60 g of the dispersing resin, 75 g of PG, and 19.4 g of a 34 mass% potassium hydroxide aqueous solution, and the contents were kneaded for 25 minutes at a rotor peripheral speed of 2.94 m/s and a pan peripheral speed of 1 m/s. Subsequently, 306 g of ion-exchanged water was gradually added to the kneaded mixture in the intensive mixer while continuing stirring, after which 12 g of PG and 127.5 g of ion-exchanged water were further added and mixed so that the pigment concentration was 20 mass%, and thereby an aqueous pigment dispersion (pigment dispersion Y) having a pigment concentration of 20 mass% was obtained.

Pigment Dispersion C (Cyan)

A pigment dispersion C (pigment concentration: 20 mass%) was prepared in the same manner as the pigment dispersion Y with the exception that the cyan pigment was used instead of the yellow pigment.

Pigment Dispersion M (Magenta)

A pigment dispersion M (pigment concentration: 20 mass%) was prepared in the same manner as the pigment dispersion Y with the exception that the magenta pigment was used instead of the yellow pigment.

1. Preparation of Ink Set

Examples 1 to 3 and Comparative Examples 1 to 3

The pigment dispersion Y, the pigment dispersion C, the pigment dispersion M, a binder, an aqueous solvent, a surfactant, a preservative, and distilled water were mixed and stirred at the compositional ratios described in Table 1 to prepare a yellow ink, a cyan ink, and a magenta ink, respectively, and thereby an ink set was obtained.
All the contents described in Table 1 are based on the total amount of each ink.

2. Ink Set Evaluation

2-1. Chroma Evaluation

For each of the examples and comparative examples, a color ink cartridge of an inkjet printer (PX-S740) available from Epson Corporation was filled with the cyan ink, the magenta ink, and the yellow ink of the ink set of the given example or comparative example, and full solid images of each of the primary colors of cyan, magenta, and yellow, and full solid images of the secondary colors of red, green and blue, which are combinations of the three primary colors, were printed on inkjet plain paper (trade name "NEXT-IJ <70>", available from Nippon Paper Industries Co., Ltd., basis weight: 81.4 g/m$^2$) in a plain paper standard mode.

The color of the full solid image of each color was measured using a spectrocolorimeter (trade name "eXact", available from X-Rite, Inc.) under the following measurement conditions, and the chroma of each color image was determined from the a value and the b value of each color image using the following equation.

$$\text{Chroma} = \sqrt{(a^2 + b^2)}$$

The following conditions were used as the measurement conditions.

Observation illumination/observer viewing angle: D65/2°
Concentration status: ISO Status T
ΔE: CIE ΔE* (1976)

Moreover, the evaluation criteria for the c* (chroma) of each of red, green, and blue were as follows.

Red

✕: < 50, △: from 50 to less than 55, ○: from 55 to 60, ◎: > 60

Green

✕: < 40, △: from 40 to less than 45, ○: from 45 to 50, ◎: > 50

Blue

✕: < 35, △: from 35 to less than 39, ○: from 39 to 43, ◎: > 43

2-2. Abrasion Resistance (Coated Paper)

For each of the examples and comparative examples, an inkjet printer (PX-S740) available from Epson Corporation was filled with the respective ink set, and full solid printing was carried out on coated paper ("SWORD iJET (trade name) 4.3 gloss", available from Mitsubishi Paper Mills Limited, basis weight: 104.7 g/m$^2$), and a coating film of ink was thereby obtained. The obtained coating film was dried at room temperature (25°C) for 12 hours. Next, the dried coating film was rubbed 50 times with a load of 100 g/cm$^2$ using the RT-300 Gakushin-Type Rubbing Tester (available from Daiei Kagaku Seiki Mfg. Co., Ltd.) and using the same paper as the printing substrate as a rubbing element. The degree of peeling of the coating film was visually observed, and the abrasion resistance (image fastness) was evaluated according to the following criteria.

Evaluation Criteria

O: No scratching was observed on the printed matter or, if observed, the scratching was minimal.
✕: Numerous scratches were observed on the printed matter, and dark coloration was partially observed on the paper of the rubbing element.

The results are summarized in Table 1.

[Table 1]

| | | Example 1 | | | Example 2 | | | Example 3 | | | Comparative Example 1 | | | Comparative Example 2 | | | Comparative Example 3 | | |
|---|---|---|---|---|---|---|---|---|---|---|---|---|---|---|---|---|---|---|---|
| Pigment Dispersion Type | | C | M | Y | C | M | Y | C | M | Y | C | M | Y | C | M | Y | C | M | Y |
| Ink Composition (mass%) | Pigment | 3.0 | 8.0 | 8.0 | 5.0 | 8.0 | 8.0 | 4.0 | 7.0 | 5.0 | 2.5 | 8.0 | 8.0 | 5.5 | 8.0 | 8.0 | 3.0 | 8.0 | 8.0 |
| | PG | 18.0 | 15.0 | 15.0 | 16.0 | 15.0 | 15.0 | 17.0 | 14.0 | 19.0 | 19.0 | 15.0 | 15.0 | 15.0 | 15.0 | 15.0 | 19.0 | 16.0 | 16.0 |
| | Gly | 15.0 | 6.0 | 15.0 | 15.0 | 6.0 | 15.0 | 15.0 | 7.0 | 15.0 | 15.0 | 6.0 | 15.0 | 15.0 | 6.0 | 15.0 | 15.0 | 6.0 | 15.0 |
| | Binder 1 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | | | |
| | Preservative | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | Surfactant | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Dispersing resin | 1.2 | 3.2 | 3.2 | 2.0 | 3.2 | 3.2 | 1.6 | 2.8 | 2.0 | 1.0 | 3.2 | 3.2 | 2.2 | 3.2 | 3.2 | 1.2 | 3.2 | 3.2 |
| | Water | 60.7 | 65.7 | 56.7 | 59.9 | 65.7 | 56.7 | 60.3 | 67.1 | 56.9 | 60.4 | 65.7 | 56.7 | 60.2 | 65.7 | 56.7 | 60.7, | 65.7 | 56.7 |
| M/C[*1] | | 2.7 | | | 1.6 | | | 1.8 | | | 3.2 | | | 1.5 | | | 2.7 | | |
| Evaluations | Red chroma (c*) | 61 | | ◎ | 61 | | ◎ | 55 | | ○ | 56 | | ○ | 53 | | △ | 61 | | ◎ |
| | Green chroma (c*) | 51 | | ◎ | 52 | | ◎ | 48 | | ○ | 38 | | × | 37 | | × | 49 | | ○ |
| | Blue chroma (c*) | 44 | | ◎ | 46 | | ◎ | 43 | | ○ | 36 | | △ | 43 | | ○ | 42 | | ○ |
| | Abrasion resistance | ○ | | | ○ | | | ○ | | | ○ | | | ○ | | | × | | |

*1: Magenta/cyan pigment content ratio

As in the examples described above, ink sets satisfying the requirements of the present invention exhibited an excellent balance in chroma for red, green, and blue, which are secondary colors, and exhibited an improvement in the chroma of green in particular.

On the other hand, in Comparative Examples 1 and 2 in which the content of the yellow ink and the pigment content of the cyan ink did not satisfy the requirements of the present invention, the chroma of green was poor. In Comparative Example 1 in which the pigment content of the cyan ink was lower than the content stipulated by the present invention, the chroma of blue was also low, whereas in Comparative Example 2 in which the pigment content was higher than the content stipulated by the present invention, the chroma of red was low. In Comparative Example 3, which did not contain a binder satisfying the requirements of the present invention, the abrasion resistance of the printed matter was reduced.

In addition, in the ink sets that satisfied the requirements of the present invention, a balance was achieved between the ink density (OD) and an improvement in chroma of the printed matter by suppressing aggregation of the pigments in the ink and improving the dispersion stability.

**INDUSTRIAL APPLICABILITY**

The ink set of the present invention exhibits an improvement in the chroma of primary and secondary colors, and particularly in the chroma of green, and excels in abrasion resistance of a printed image. Therefore, the ink set of the present invention is particularly useful as an inkjet ink for use in an industrial inkjet printer.

**Claims**

1.    An ink set comprising:

a yellow ink containing a binder, a dispersing resin, an aqueous solvent, and C.I. Pigment Yellow 74 as a pigment; and
a cyan ink containing a binder, a dispersing resin, an aqueous solvent, and C.I. Pigment Blue 15:3 as a pigment, wherein
the C.I. Pigment Yellow 74 has a volume-average particle size of from 80 to 120 nm and a content of from 4.0 to 10.0 mass% in relation to a total amount of the yellow ink, and
the C.I. Pigment Blue 15:3 has a volume-average particle size of from 80 to 100 nm and a content exceeding 2.5 mass% and less than 5.5 mass% in relation to a total amount of the cyan ink.

2.    The ink set according to claim 1, wherein

a minimum film-forming temperature of the binder is 25°C or higher, and
a volume-average particle size of the binder is equal to or less than the volume-average particle size of the C.I. Pigment Yellow 74 and/or the volume-average particle size of the C.I. Pigment Blue 15:3.

3.    The ink set according to claim 1 or 2, further comprising a magenta ink containing a binder, a dispersing resin, an aqueous solvent, and a solid solution pigment, wherein

the solid solution pigment includes C.I. Pigment Red 122 and C.I. Pigment Violet 19,
a mass ratio of the C.I. Pigment Red 122 to the C.I. Pigment Violet 19 ((C.I. Pigment Red 122)/(C.I. Pigment Violet 19)) in the solid solution pigment is from 4/1 to 1/1,
the solid solution pigment has a volume-average particle size of from 90 to 130 nm, and
a ratio of a concentration of the solid solution pigment contained in the magenta ink to a concentration of the pigment contained in the cyan ink is 1.5 or greater.

4.    The ink set according to claim 1 or 2, further comprising a black ink.

## INTERNATIONAL SEARCH REPORT

| International application No. |
| --- |
| **PCT/JP2024/001187** |

### A. CLASSIFICATION OF SUBJECT MATTER

*C09D 11/40*(2014.01)i; *B41M 5/00*(2006.01)i; *C09D 11/322*(2014.01)i
FI: C09D11/40; B41M5/00 120; C09D11/322

According to International Patent Classification (IPC) or to both national classification and IPC

### B. FIELDS SEARCHED

Minimum documentation searched (classification system followed by classification symbols)

C09D11/40; B41M5/00; C09D11/322

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | JP 2012-35456 A (SEIKO EPSON CORP.) 23 February 2012 (2012-02-23) claim 1, paragraphs [0086]-[0087], [0095], [0101], [0112], [0119], table 3, ink Y1, table 4, ink C1 | 1-2, 4 |
| A | | 3 |
| X | JP 2020-50843 A (RICOH COMPANY, LTD.) 02 April 2020 (2020-04-02) claims 5-8, paragraphs [0021]-[0038], examples 2, 3, tables 1-3 | 1-2, 4 |
| Y | | 3 |
| Y | JP 2020-23604 A (KAO CORPORATION) 13 February 2020 (2020-02-13) claims 1, 3, 8, paragraphs [0016]-[0017], [0066]-[0068], tables 2, 5, example 3-1 | 3 |
| A | JP 2005-48017 A (SEIKO EPSON CORP.) 24 February 2005 (2005-02-24) claims 1, 2, paragraphs [0007]-[0017], table 1, composition examples 2-5, table 4 | 1-4 |

☐ Further documents are listed in the continuation of Box C.   ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **11 March 2024** | **26 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/001187** |

| Patent document cited in search report | | | Publication date (day/month/year) | Patent family member(s) | Publication date (day/month/year) |
| --- | --- | --- | --- | --- | --- |
| JP | 2012-35456 | A | 23 February 2012 | (Family: none) | |
| JP | 2020-50843 | A | 02 April 2020 | (Family: none) | |
| JP | 2020-23604 | A | 13 February 2020 | (Family: none) | |
| JP | 2005-48017 | A | 24 February 2005 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011012226 A
- JP 2005041906 A
- WO 2018190139 A
- JP 11049998 A
- JP 2000319534 A
- JP 2003253150 A